(19) **Europäisches Patentamt**
**European Patent Office**
**Office européen des brevets**

(11) **EP 4 318 930 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **23217368.2**

(22) Anmeldetag: **25.03.2022**

(51) Internationale Patentklassifikation (IPC):
**H02P 6/185** (2016.01)  **H02P 6/15** (2016.01)

(52) Gemeinsame Patentklassifikation (CPC):
**H02P 6/185; H02P 6/15**

(54) **VERFAHREN UND VORRICHTUNG ZUR BEREITSTELLUNG EINES KOMMUTIERUNGSINTERVALLS**

METHOD AND APPARATUS FOR PROVIDING A COMMUTATION INTERVAL

PROCÉDÉ ET APPAREIL POUR FOURNIR UN INTERVALLE DE COMMUTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: 30.03.2021 DE 102021203236
30.03.2021 DE 102021203222
15.04.2021 DE 102021203758

(43) Veröffentlichungstag der Anmeldung:
**07.02.2024 Patentblatt 2024/06**

(62) Dokumentnummer(n) der früheren Anmeldung(en) nach Art. 76 EPÜ:
**22718194.8 / 4 289 060**

(73) Patentinhaber: **Elmos Semiconductor SE**
**44227 Dortmund (DE)**

(72) Erfinder:
• BERNHARDT, Jan
01127 Dresden (DE)

• KRUPAR, Jörg
01833 Stolpen (DE)

(74) Vertreter: **Tautz & Schuhmacher**
**Nibelungenstraße 84**
**80639 München (DE)**

(56) Entgegenhaltungen:
EP-A2- 2 387 143        WO-A2-2009/047217
DE-A1- 10 220 077        DE-A1- 10 221 385
DE-A1- 102016 123 707    DE-A1- 102016 123 715
DE-A1- 102019 127 051

• LI YANG ET AL: "A Sensorless Commutation Error Correction Method for High-Speed BLDC Motors Based on Phase Current Integration", IEEE TRANSACTIONS ON INDUSTRIAL INFORMATICS, IEEE SERVICE CENTER, NEW YORK, NY, US, vol. 16, no. 1, 20 May 2019 (2019-05-20), pages 328 - 338, XP011766575, ISSN: 1551-3203, [retrieved on 20200107], DOI: 10.1109/TII.2019.2917608

**Beschreibung**

Die vorliegende Erfindung betrifft ein Verfahren zur Bereitstellung eines Kommutierungsintervalls für einen Dreiphasen-Elektromotor, eine Steuereinheit für einen Dreiphasen-Elektromotor und einen Dreiphasen-Elektromotor. Die Erfindung liegt somit insbesondere auf dem Gebiet der Elektromotoren und der Ansteuerung von Elektromotoren.

Für den zuverlässigen Betrieb eines Dreiphasen-Elektromotors ist oftmals die Detektion der Rotorposition, insbesondere im Stillstand oder bei niedrigen Drehzahlen des Motors, vorteilhaft. Insbesondere ist eine Kenntnis der Rotorposition für eine akkurate und zuverlässige Kommutierung vorteilhaft. Dazu sind im Stand der Technik diverse verschiedene Verfahren bekannt, welche in sensorbasierte und sensorlose Verfahren unterteilbar sind. Sensorbasierte Verfahren haben den Nachteil, dass sie geeignete Sensoren benötigen und entsprechend der Hardwareaufwand und die damit verbundenen Kosten höher sind, als bei sensorlosen Verfahren. Sensorlose Verfahren beruhen typischerweise auf der Einspeisung von Testpulsen bzw. Messpulsen in den Elektromotor, was zu einer unerwünschten Geräuschentwicklung führen kann. Die sensorlosen Verfahren beruhen oftmals auf der Positions- und Stromabhängigkeit von Statorinduktivitäten des Elektromotors. Die verschiedenen sensorlosen Verfahrensarten sind beispielsweise in der Offenlegungsschrift DE 10 2019 127 051 A1 beschrieben.

Die applikativen Grenzen von sensorlosen Verfahren zur Detektion der Rotorposition sind nach wie vor Gegenstand von Forschung und Entwicklung und können häufig nur mit hohem Aufwand experimentell bestimmt werden. Dabei kann es auch zu Fehlinterpretationen kommen, die unter Umständen erst in einem späten Stadium der Produktentwicklung als solche auffallen und sodann zu entsprechenden Problemen führen und/oder einen hohen Aufwand und hohe Kosten für deren Beseitigung erfordern.

Eine simulative Vorhersage der Eigenschaften des Elektromotors bzw. der Applikation ist prinzipiell komfortabel, allerdings herkömmlicherweise nicht ohne weiteres möglich, da dies eine genaue Kenntnis der Magnetisierungsparameter des Elektromotors erfordert. Die Magnetisierungsparameter umfassen dabei den Parameter $k_1$, der eine Induktivitätsvariation durch die Rotormagnete charakterisiert, und den Parameter $k_2$, der eine Induktivitätsvariation bedingt durch die Bestromung des Elektromotors charakterisiert.

Herkömmlicherweise ist die Bestimmung der Magnetisierungsparameter, speziell von $k_2$ nur empirisch möglich. Einfache Aufbauten zur direkten Bestimmung aus Messungen versagen bisher insbesondere durch die Einflüsse parasitärer Widerstände im Gesamtaufbau. Der Parameter $k_1$ ist prinzipiell auf direktem Weg über Messung von der Induktivitäten $L_D$ und $L_Q$ an einer einzelnen Wicklung des Motors bestimmbar, jedoch kann meist nicht direkt eine einzelne Wicklung des Motors vermessen werden. Ursache dafür ist, dass typischerweise nur die äußeren drei Klemmen des Dreiphasen-Elektromotors zugänglich sind. Intern ist der Motor dann entweder in Sternschaltung oder in Dreieckschaltung verschaltet. Dadurch überlagern sich die Effekte an wenigstens zwei der drei Wicklungen und die direkte Berechnung ist nicht mehr möglich.

Sensorlose Verfahren zur Bestimmung der initialen Rotorlage beruhen typischerweise auf einer Messung der Spannung am induktiven Spannungsteiler, d.h. am Anschluss der unbestromten Phase. Diese weisen jedoch den Nachteil auf, dass in manchen Fällen keine zuverlässige Nord-/Süd-Detektion möglich ist. Dies kann insbesondere bei hochstromfähigen Motoren der Fall sein.

Um eine zuverlässige Umschaltung zwischen Kommutierungsintervallen zu erreichen, schlägt die DE 10 2019 127 051 A1 ein Verfahren vor, bei welchem eine biopolare Pulsweitenmodulation an die Anschlüsse von jeweils zwei der drei Phasen angelegt wird und bei Erreichen eines vorbestimmten Spannungs-Schwellwerts auf das nächste Kommutierungsintervall umgeschaltet wird.

Die DE 10 2016 123707 A1 beschreibt eine Ansteuervorrichtung für einen Motor. Dabei kann über einen passiv geschalteten Phasenanschluss auf eine Spannung zugegriffen werden, die zwischen einem Sternpunkt und einem Bezugspotenzial anliegt. Dabei sei darauf zu achten, dass ein Stromfluss durch die passive Phase vermieden wird, um den sich an dem Sternpunkt ausbildenden Spannungsteiler im Wesentlichen nicht zu beeinflussen.

Die DE 10 2016 123715 A1 beschreibt eine Ansteuervorrichtung für einen mehrphasigen Motor mit einer Steuereinrichtung. Die Steuereinrichtung ist dazu eingerichtet, in vier von fünf Phasenanschlüsse ein pulsweitenmoduliertes Spannungsmuster einzuprägen, sodass sich in dem ersten Phasenanschluss ein von dem Drehwinkel des mehrphasigen Motors abhängiges Auswertesignal ergibt. Die Steuereinrichtung ist ferner dazu eingerichtet, aus dem Auswertesignal den Drehwinkel und/oder eine Kommutationsbedingung des mehrphasigen Motors zu bestimmen.

Die Veröffentlichung von Li et al. "A Sensorless Commutation Error Correction Method for High-Speed BLDC Motors Based on Phase Current Integration", IEEE TRANSACTIONS ON INDUSTRIAL INFORMATICS, VOL. 16, No. 1 (2020) beschreibt Verfahren zur Fehlerkorrektur für Hochgeschwindigkeit-BLDC Motoren basierend auf einer Phasenstromintegration.

Es ist die Aufgabe der vorliegenden Erfindung, ein Verfahren und eine Steuereinheit für einen Dreiphasen-Elektromotor bereitzustellen, mit dem die Zuverlässigkeit der Kommutierung erhöht und die Hardwareanforderungen gering gehalten werden können.

Diese Aufgaben werden gelöst durch Verfahren, Steuereinheiten, Vorrichtungen und Dreiphasen-Elektromotoren mit den Merkmalen der jeweiligen unabhängigen Ansprüche. Vorteilhafte Ausgestaltungen sind in den Unteransprüchen und in der Beschreibung angegeben.

In einem ersten Aspekt betrifft die Erfindung ein Verfahren zur Bereitstellung eines Kommutierungsintervalls für einen Dreiphasen-Elektromotor. Das Verfahren umfasst ein Bereitstellen eines initialen Kommutierungsintervalls für einen Betrieb des Dreiphasen-Elektromotors, wobei das Kommutierungsintervall eine obere Umschaltgrenze $g_{o,0}$ und eine untere Umschaltgrenze $g_{u,0}$ aufweist, sowie ein Ermitteln eines Betriebsstroms (i), der im Betrieb des Dreiphasen-Elektromotors auftritt. Ferner umfasst das Verfahren ein Anpassen des initialen Kommutierungsintervalls in Abhängigkeit vom ermittelten Betriebsstrom (i), wobei eine mit dem Quadrat des Betriebsstroms (i) skalierende Anpassung eines Abstands zwischen der oberen Umschaltgrenze $g_{o,i}$ und der unteren Umschaltgrenze $g_{u,i}$ des Kommutierungsintervalls erfolgt und/oder eine linear mit dem Betriebsstrom skalierende Anpassung einer Verschiebung des Kommutierungsintervalls erfolgt.

In einem weiteren Aspekt betrifft die Erfindung eine Steuereinheit für einen Dreiphasen-Elektromotor. Die Steuereinheit ist dazu eingerichtet, ein initiales Kommutierungsintervall für einen Betrieb des Dreiphasen-Elektromotors bereitzustellen, wobei das Kommutierungsintervall eine obere Umschaltgrenze $g_{o,0}$ und eine untere Umschaltgrenze $g_{u,0}$ aufweist. Ferner ist die Steuereinheit dazu eingerichtet, einen Betriebsstrom i zu ermitteln, der im Betrieb des Dreiphasen-Elektromotors auftritt bzw. der für den Betrieb des Dreiphasen-Elektromotors vorgesehen ist oder verwendet wird. Ferner ist die Steuereinheit dazu eingerichtet, das initiale Kommutierungsintervall in Abhängigkeit vom ermittelten Betriebsstrom i derart anzupassen, dass eine mit dem Quadrat des Betriebsstroms i skalierende Anpassung eines Abstands zwischen der oberen Umschaltgrenze $g_{o,i}$ und der unteren Umschaltgrenze $g_{u,i}$ des Kommutierungsintervalls erfolgt und/oder eine linear mit dem Betriebsstrom skalierende Anpassung einer Verschiebung des Kommutierungsintervalls erfolgt.

In einem weiteren Aspekt betrifft die Erfindung einen Dreiphasen-Elektromotor umfassend eine erfindungsgemäße Steuereinheit.

Ein Dreiphasen-Elektromotor ist dabei ein Elektromotor mit einem Stator und einem Rotor, welcher drei Phasen bzw. drei Wicklungen aufweist, die jeweils über einen eigenen Anschluss bestrombar sind. Die Wicklungen können dabei im Elektromotor derart angeordnet sein, dass diese zumidnest teilweiese einander überlappen. Beispielsweise können die Phasen des Elektromotors in einer Dreiecksschaltung oder in einer Sternschaltung miteinander verschaltet sein. Die Begriffe Dreiphasen-Elektromotor, Elektromotor und Motor werden in diesem Offenbarungstext als Synonyme verwendet.

Ein Kommutierungsintervall ist dabei ein Wertebereich für eine rückgemessene Spannung an der unbestromten Phase, über welche eine vorbestimmte Kommutierung unverändert beibehalten wird. Das Kommutierungsintervall kann dabei einem bestimmten Drehwinkelbereich des Rotors gegenüber dem Stator des Dreiphasen-Elektromotors entsprechen, wenngleich keine direkte Vergleichbarkeit gegeben sein muss. In einem jeweiligen Kommutierungsintervall ist die Kommutierung optional derart gewählt, dass der Motor mit der vorbestimmten Kommutierung die maximale Wirkung und/oder das maximale Drehmoment entfaltet im Vergleich zu anderen Kommutierungsmöglichkeiten. Wenn die Spannung an der unbestromten Phase das jeweilige Kommutierungsintervall verlässt, ist ein Wechsel des Kommutierungsintervalls erforderlich bzw. vorteilhaft, um das größtmögliche Drehmoment und/oder die größtmögliche Wirkung zu erzielen. Eine Änderung der Kommutierung bedeutet dabei, dass die Zuordnung der Phasen und/oder die Stromrichtung in den Phasen geändert wird, d.h. welche beiden Phasen bestromt werden bzw. welche Phase unbestromt bleibt. In Abhängigkeit davon, in welche Richtung sich der Rotor relativ zum Stator dreht, kann der Wechsel zwischen den Kommutierungsintervallen bzw. zwischen den Phasen, die bestromt werden, entgegengesetzt gerichtet sein. Im Rahmen dieser Offenbarung soll entsprechend der Begriff Kommutierungsintervall einen Spannungsbereich betreffen. Das initiale Kommutierungsintervall entspricht dabei einem anfänglichen Startwert für das Kommutierungsintervall, der noch nicht durch ein erfindungsgemäßes Verfahren an den Betriebsstrom angepasst wurde oder einer weiteren Anpassung unterzogen werden soll.

Die obere und untere Umschaltgrenze $g_{o,0}$ und $g_{u,0}$ sind dabei jene Spannungswerte, welche die Endpunkte des (initialen) Kommutierungsintervalls darstellen. Bei Erreichen und/oder Übersteigen einer Spannung, die der oberen Umschaltgrenze entspricht, kann ein Wechsel in das darauffolgende Kommutierungsintervall erforderlich bzw. vorteilhaft sein. Bei Erreichen und/oder Unterschreiten einer Spannung, die der unteren Umschaltgrenze entspricht, kann ein Wechsel in das vorherige Kommutierungsintervall erforderlich bzw. vorteilhaft sein.

Der Abstand zwischen der oberen Umschaltgrenze $g_{o,i}$ und der unteren Umschaltgrenze $g_{u,i}$ legt dabei eine Breite bzw. Größe des Kommutierungsintervalls fest. Die Verschiebung des Kommutierungsintervalls kann dabei eine Verschiebung des Mittelpunkts des Kommutierungsintervalls entlang des Drehwinkels des Rotors bzw. der zugehörigen Spannung darstellen, ohne dass jedoch dabei eine Änderung der Breite bzw. Größe des Kommutierungsintervalls mit einhergeht.

Der Betriebsstrom ist ein elektrischer Strom bzw. eine Stromstärke, mit der die jeweiligen bestromten Phasen des Dreiphasen-Elektromotors während dessen Betriebs bestromt werden. Der Betriebsstrom kann dabei insbesondere von der Last und/oder Beanspruchung des Dreiphasen Elektromotors abhängen. Der Betriebsstrom kann auch als Laststrom bezeichnet werden. Insbesondere kann der Betriebsstrom die Spannung an der unbestromten Phase beeinflussen und Abweichungen bei der Ermittlung des Rotordrehwinkels und/oder bei dem Kommutierungsintervall verursachen.

Die Erfindung bietet den Vorteil, dass der Betriebsstrom als Einflussgröße bei der Bereitstellung eines Kommutierungsintervalls mit berücksichtigt werden kann und entsprechend unerwünschte Abweichungen des Kommutierungsintervalls von einem idealen Kommutierungsintervall reduziert oder gar ganz vermieden werden können. Dies bietet den Vorteil, dass die Zuverlässigkeit der Ansteuerung für Dreiphasen-Elektromotoren erhöht werden kann. Außerdem bietet dies den Vorteil, dass ein mit erfindungsgemäß bereitgestellten Kommutierungsintervallen angesteuerter Dreiphasen-Elektromotor mit einer hohen Effizienz betrieben werden kann, da zuverlässig ein hohes Drehmoment erreicht werden kann und interne Energieverluste reduziert werden können. Zudem bietet die Erfindung den Vorteil, dass durch erfindungsgemäß bereitgestellte Kommutierungsintervalle die Geräuschentwicklung beim Betrieb eines entsprechend angesteuerten Dreiphasen-Elektromotors erhöht werden kann.

Optional werden vorbestimmte Funktionsparameter für die mit dem Quadrat des Betriebsstroms skalierende Anpassung des Abstands zwischen der oberen Umschaltgrenze $g_{o,i}$ und der unteren Umschaltgrenze $g_{u,i}$ und/oder für die linear mit dem Betriebsstrom skalierende Anpassung der Verschiebung bereitgestellt. Optional umfasst auch das Anpassen des Kommutierungsintervalls ein Berechnen des angepassten Abstands und/oder der angepassten Verschiebung unter Verwendung der vorbestimmten Funktionsparameter und des vorliegenden Betriebsstroms. Dies bietet den Vorteil, dass anhand der vorbestimmten Funktionsparameter die Anpassung des Abstands der Umschaltgrenzen und der Verschiebung des Kommutierungsintervalls anhand einfacher Algorithmen vorgenommen werden können und entsprechend der Hardware- und/oder Rechenaufwand für das Bereitstellen der angepassten Kommutierungsintervalle gering gehalten werden können.

Optional werden mehrere angepasste Kommutierungsintervalle für unterschiedliche Betriebsströme (i) bereitgestellt und optional umfasst das Anpassen des Kommutierungsintervalls ein Auswählen eines der bereitgestellten, angepassten Kommutierungsintervalle anhand des vorliegenden Betriebsstroms. Mit anderen Worten werden mehrere vorgegebene Kommutierungsintervalle bereitgestellt, aus denen sodann eines anhand des vorherrschenden Betriebsstroms ausgewählt wird. Beispielsweise können jedem der bereitgestellten, angepassten Kommutierungsintervalle ein oder mehrere Wertebereiche zugeordnet sein. Sofern der ermittelte Betriebsstrom in dem einen oder einem der mehreren zugeordneten Wertebereiche liegt, kann das jeweilige angepasste Kommutierungsintervall für den Betrieb des Motors verwendet werden. Sofern sich der Betriebsstrom ändert und einen Wert annimmt, der außerhalb des vorherigen Wertebereichs liegt, kann entsprechend ein anderes Kommutierungsintervall ausgewählt werden, welches sodann für den weiteren Betrieb des Motors herangezogen wird.

Optional umfasst das Verfahren ein Bereitstellen von vorbestimmten Schwellwerten, wobei bei Vorliegen eines Betriebsstroms (i), der einem der Schwellwerte entspricht, das Anpassen des Kommutierungsintervalls erfolgt. Beispielsweise kann dazu der ermittelte Betriebsstrom mit den vorbestimmten Schwellwerten verglichen werden und bei Erreichen oder Über- bzw. Unterschreiten des jeweiligen Schwellwerts das zum jeweiligen Schwellwert zugehörige Kommutierungsintervall verwendet werden. Dies bietet den Vorteil, dass es eine einfache Implementierung ermöglicht und zudem die Menge der zu speichernden Daten gering ist. Die Daten können beispielsweise innerhalb der Steuereinheit für die Ansteuerung gespeichert sein und/oder von extern der Steuereinheit übergeben werden.

Optional umfasst das Verfahren ein Bestimmen von Zusatz-Schwellwerten mittels Interpolation und/oder Extrapolation der vorbestimmten Schwellwerte, wobei bei Vorliegen eines Betriebsstroms, der einem der bestimmten Zusatz-Schwellwerte entspricht, das Anpassen des Kommutierungsintervalls erfolgt. Mit anderen Worten kann das Verfahren ein Interpolieren und/oder Extrapolieren umfassen, um auf Basis der vorbestimmten Schwellwerte weitere Zusatz-Schwellwerte zu erzeugen, die sodann für die Auswahl des Kommutierungsintervalls in Abhängigkeit vom Betriebsstrom herangezogen werden können. Dies ermöglicht eine feinere Abstimmung und Zuordnung von Kommutierungsintervallen zu ermittelten Betriebsströmen.

Optional erfolgt die mit dem Quadrat des Betriebsstroms skalierende Anpassung eines Abstands zwischen der oberen Umschaltgrenze $g_{o,i}$ und der unteren Umschaltgrenze $g_{u,i}$ des Kommutierungsintervalls gemäß der Öffnung der Parabel und gemäß einer optionalen Verschiebung des Scheitelpunkts. Mit anderen Worten wird die Anpassung des Abstands der Umschaltgrenzen anhand einer parabolischen Funktion vorgenommen, die durch eine Öffnung der Parabel und einen y-Achsenabschnitt charakterisiert ist. Die Parabel entspricht dabei einer Funktion der Spannungsdifferenz zwischen der oberen und der unteren Umschaltgrenze (vertikale Achse) gegenüber dem Betriebsstrom (horizontale Achse). Für mittelwertfreie Messpulsgenerierungsverfahren ist die Parabel achsensymmetrisch zu $i_0 = 0$. Die vertikale Lage des Scheitelpunkts gibt dabei jene Spannungsdifferenz an, welche die obere und untere Umschaltgrenze des Kommutierungsintervall aufweisen sollen, wenn keine vom Betriebsstrom abhängige Anpassung des initialen Kommutierungsintervalls erfolgt. Bei mittelwertbehafteten Messpulsgenerierungsverfahren kann die Symmetrieachse jedoch auch verschoben sein und bei einem Wert $i_0 \neq 0$ liegen. In diesem Fall liegt der Scheitelpunkt der Parabel nicht auf der vertikalen Achse i = 0 sondern verschoben beim Wert $i_0 \neq 0$. Dies ermöglicht eine einfache Parametrierung für die Anpassung des Abstands der oberen und unteren Umschaltgrenze des Kommutierungsintervalls.

Optional erfolgt die linear mit dem Betriebsstrom skalierende Anpassung der Verschiebung des Kommutierungsintervalls gemäß der Steigung und optional einer Nullpunktverschiebung einer Geraden. Dabei beschreibt die Gerade eine lineare Abhängigkeit der Verschiebung des Mittelwertes des Kommutierungsintervalls, welche einen Spannungswert darstellt, um welchen das Kommutierungsintervall gegenüber initialen Kommutierungsintervall in Abhängigkeit vom Betriebsstrom verschoben wird. Bei mittelwertfreien Messpulsgenerierungsverfahren geht die Gerade durch den Koordinatenursprung. Bei mittelwertbehafteten Messpulsgenerierungsverfahren ist zusätzlich die Nullpunktverschiebung zu berücksichtigen. Dies ermöglicht eine einfache Parametrierung für die Anpassung der Verschiebung der oberen und unteren Umschaltgrenze des Kommutierungsintervalls.

Optional entspricht die obere Umschaltgrenze $g_{o,0}$ und die untere Umschaltgrenze $g_{u,0}$ des initialen Kommutierungsintervalls jeweils einem vorgegebenen Spannungswert einer Spannung an einem induktiven Spannungsteiler des Dreiphasen-Elektromotors oder basiert darauf. Gemäß einer optionalen Ausführungsform können die obere und die untere Umschaltgrenze $g_{o,0}$ und $g_{u,0}$ (initial) bzw. $g_{o,i}$ und $g_{u,i}$ (an Betriebsstrom angepasst) jeweils auch in Form einer Spannungsdifferenz aus verschiedenen Spannungswerten zu verschiedenen Messzeitpunkten erfasst werden. Dabei kann der erste Spannungswert durch das Einspeisen eines Strompulses mittels eines Spannungspulses einer ersten Polarität und der zweite Spannungswert durch das Einspeisen eines Strompulses mittels eines Spannungspulses einer der ersten Polarität entgegengesetzten zweiten Polarität erzeugt werden. Dies bietet den Vorteil, dass die Zuverlässigkeit der Bestimmung der jeweiligen Umschaltgrenze erhöht werden kann, da durch die Verwendung der Spannungsdifferenz Störeinflüsse reduziert werden können.

Optional umfasst das Verfahren ferner ein Anpassen des initialen Kommutierungsintervalls in Abhängigkeit von einem ermittelten Spannungswert einer Versorgungsspannung, mit welcher der Dreiphasen-Elektromotor versorgt wird. Dies bietet den Vorteil, dass auch etwaige Einflüsse der Versorgungsspannung auf das Kommutierungsintervall berücksichtigt werden können und daraus resultierende Abweichungen des Kommutierungsintervalls von einem optimalen Kommutierungsintervall reduziert oder vermieden werden können.

Optional umfasst das Anpassen des initialen Kommutierungsintervalls in Abhängigkeit von dem ermittelten Spannungswert der Versorgungsspannung ein Normieren der Spannung am induktiven Spannungsteiler auf den ermittelten Spannungswert der Versorgungsspannung. Der Spannungsteiler kann dabei optional durch den Anschluss der unbestromten Phase des Motors gebildet werden, wobei der Spannungsteiler von den drehwinkelbedingt unterschiedlichen Induktivitäten der ersten und zweiten bestromten Phase des Motors verursacht wird. Die Spannung am induktiven Spannungsteiler dient dabei als jener Messwert, der mit der oberen und/oder unteren Umschaltgrenze des Kommutierungsintervalls verglichen wird, wobei ein Wechsel der Kommutierung dann erfolgt, wenn die Spannung am induktiven Spannungsteiler eine der Umschaltgrenzen erreicht. Durch das Normieren der Spannung am induktiven Spannungsteiler mit dem ermittelten Spannungswert der Versorgungsspannung können etwaige Einflüsse reduziert oder vermieden werden, welche zu einer unerwünschten Verschiebung der Spannung am Spannungsteiler gegenüber den Umschaltgrenzen des Kommutierungsintervalls führen.

Gemäß einer optionalen Ausführungsform kann die Verschiebung des Kommutierungsintervalls eine Verschiebung des Kommutierungsintervalls für den bestromten Motor betreffen und folgendem mathematischem Zusammenhang genügen:

$$(1) \qquad V = \frac{g_{o,i} + g_{u,i} - g_{o,0} + g_{u,0}}{2}$$

Dabei indizieren die Indizes o und *u* die obere bzw. untere Umschaltgrenze und der Index i die Zuordnung der Umschaltgrenze zum Betrieb des Motors mit dem ermittelten Betriebsstrom (i), d.h. mit dem Laststrom, an den die jeweilige Umschaltgrenze angepasst wurde, während der Index 0 die jeweiligen initialen Umschaltgrenzen für den unbestromten Motor kennzeichnet.

Der Abstand zwischen der oberen Umschaltgrenze $g_{o,i}$ und der unteren Umschaltgrenze $g_{u,i}$ kann optional der folgenden mathematischen Gesetzmäßigkeit genügen:

$$(2) \qquad A = g_{o,i} - g_{u,i}$$

Weitere Einzelheiten und Vorteile der Erfindung sollen nun anhand der folgenden Beispiele und bevorzugten Ausführungsformen mit Bezug auf die Figuren näher erläutert werden.

Kurzbeschreibung der Figuren:

Figur 1 zeigt in einer schematischen Darstellung einen Dreiphasen-Elektromotor mit einer Steuereinheit gemäß einer optionalen Ausführungsform.

Figuren 2A und 2B zeigen beispielhaft in schematischen Darstellungen einen Dreiphasen-Elektromotor in Sternschaltung (Figur 2A) und in Dreiecksschaltung (Figur 2B) gemäß optionalen Ausführungsformen.

Figur 3 zeigt beispielhafte initiale Kommutierungsintervalle.

Figur4 zeigt mehrere Verläufe der rückgemessenen Spannungsdifferenz.

Figur 5 zeigt in Graph 100 beispielhaft den gemessenen Verlauf der Spannung U3 am induktiven Spannungsteiler.

Figur 6 zeigt beispielhaft den gemessenen Verlauf der Spannung $U_3$ am induktiven Spannungsteiler im Vergleich zum simulierten und hinsichtlich des Magnetisierungsparameters $k_1$ optimierten Verlauf der Spannung.

Figur 7 zeigt in Graph 300 den gemessenen Verlauf der Spannung am induktiven Spannungsteiler in Abhängigkeit vom Drehwinkel $\varphi$.

Figur 8 zeigt einen Vergleich von Simulationswerten und von gemessenen Werten der Spannung für die Bestimmung von $k_2$.

Figur 9 zeigt dabei die Graphen 500 und 510, welche die lineare Abhängigkeit der Verschiebung des Kommutierungsintervalls mit dem Betriebsstrom (i) darstellen.

Figur 10 zeigt die Abhängigkeit des Abstands zwischen der oberen und unteren Umschaltgrenze $g_{o,i}$ und $g_{u,i}$.

Figur 11 zeigt in mehreren Kurven die Abhängigkeit der Verschiebung des Kommutierungsintervalls aus Figur 9.

Figur 12 zeigt die parabolischen Verläufe des Abstands der Umschaltgrenzen aus Figur 10 für die verschiedenen Versorgungsspannungen $U_S$.

Figuren 13 und 14 zeigen Kurven, welche den Kurven aus Figur 11 bzw. Figur 12 entsprechen, nachdem die jeweiligen Spannungen auf die Versorgungsspannung normiert wurden.

In den folgenden Figuren werden gleiche oder ähnliche Elemente in den verschiedenen Ausführungsformen der Einfachheit halber mit gleichen Bezugszeichen bezeichnet.

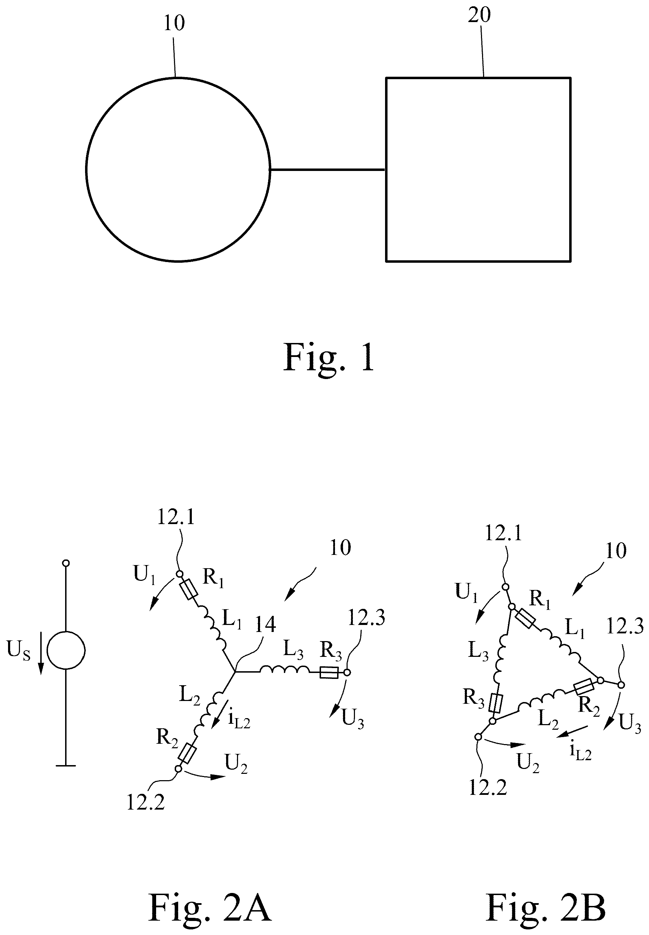

Figur 1 zeigt in einer schematischen Darstellung einen Dreiphasen-Elektromotor 10 mit einer Steuereinheit 20 gemäß einer optionalen Ausführungsform. Die Steuereinheit 20 ist dabei mit dem Dreiphasen-Elektromotor 10 kommunikativ verbunden und dazu eingerichtet, den Dreiphasen-Elektromotor 10 anzusteuern und mit elektrischer Leistung zu versorgen.

Die Figuren 2A und 2B zeigen beispielhaft in schematischen Darstellungen einen Dreiphasen-Elektromotor 10 in Sternschaltung (Figur 2A) und in Dreiecksschaltung (Figur 2B) gemäß optionalen Ausführungsformen. Der Elektromotor 10 weist dabei drei Anschlüsse 12.1, 12.2 und 12.3 für die drei verschiedenen Phasen 12 auf. Jede der drei Phasen 12.1, 12.2 und 12.3 ist dabei beispielhaft durch eine zugehörige Induktivität L1, L2 bzw. L3 und einen zugehörigen ohmschen Widerstand R1, R2 bzw. R3 charakterisiert. Die Versorgungsspannung des Elektromotors 10 ist als $U_S$ gekennzeichnet und entspricht einer Potenzialdifferenz gegenüber einem Massepotenzial. An den drei Anschlüssen 12.1, 12.2 und 12.3 der drei Phasen können voneinander unterschiedliche Spannungen $U_1$, $U_2$ bzw. $U_3$ anliegen, welche ebenfalls eine Potenzialdifferenz gegenüber dem Massepotenzial darstellen.

Jede der drei Phasen ist an einem Ende mit einem zugehörigen Anschluss 12.1, 12.2 und 12.3 verbunden. Im Falle der Sternschaltung (Figur 2A) ist das andere Ende mit einem Sternpunkt 14 der Sternschaltung verbunden. Im Falle der Dreiecksschaltung (Figur 2B) ist das jeweils andere Ende mit dem Anschluss 12.1, 12.2 bzw. 12.3 der nächsten Phase verbunden.

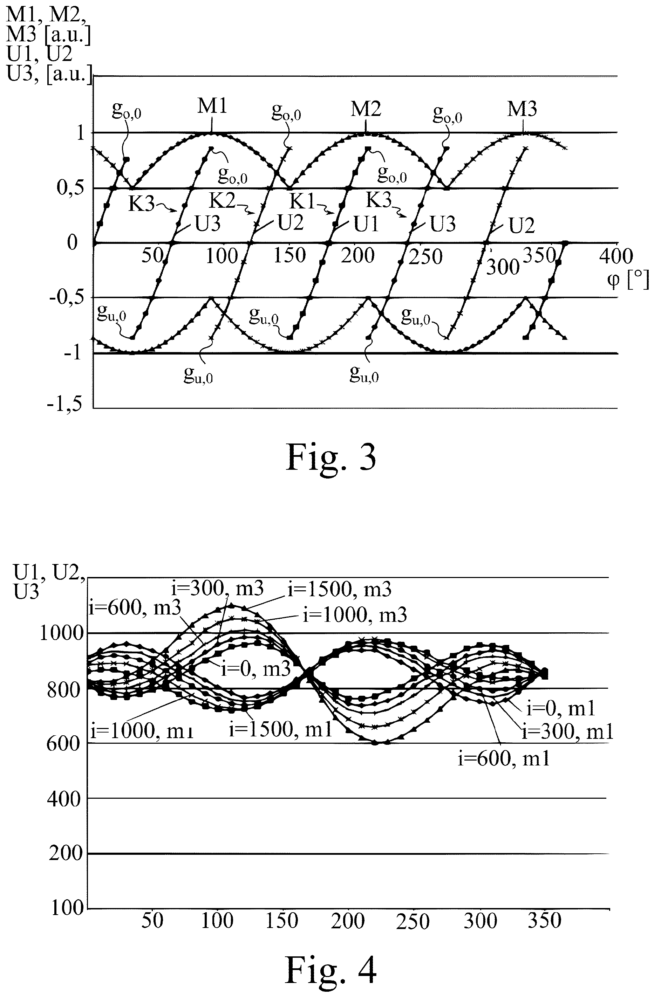

Figur 3 zeigt beispielhafte initiale Kommutierungsintervalle $K_1$, $K_2$ und $K_3$, welche für eine hohe Drehmoment-erzeugung ($M_1$, $M_2$, $M_3$) (in beliebigen Einheiten) gewählt werden über den Drehwinkel $\varphi$ (in Grad) des Rotors gegenüber dem Stator des Dreiphasen-Elektromotors 10. Die Kommutierungsintervalle $K_1$ bis $K_3$ werden dabei durch eine obere Umschaltgrenze $g_{o,0}$ und eine untere Umschaltgrenze $g_{u,0}$ begrenzt. Die an der im jeweiligen Kommutierungsintervall $K_1$ bis $K_3$ rückgemessene Spannung bzw. Spannungsdifferenz zwischen zwei aufeinanderfolgenden Messwerten bei Messpulsen mit unterschiedlicher Polarität werden dabei mit den Umschaltgrenzen des jeweiligen initialen Kommutie-rungsintervalls $K_1$ bis $K_3$ verglichen. Sofern die jeweils gemessene Spannung $U_1$, $U_2$ oder $U_3$ eine der Umschaltgrenzen $g_{o,0}$ oder $g_{u,0}$ erreicht, erfolgt eine Änderung der Kommutierung, sodass die Bestromung der Phasen des Elektromotors umgeschaltet wird. Die Umschaltung der Kommutierung erfolgt dabei derart, dass jeweils jene beiden Phasen des Elektromotors bestromt werden, die angesichts des vorherrschenden Drehwinkels $\varphi$ den Rotor des Elektromotors mit

dem höchsten Drehmoment $M_1$, $M_2$ bzw. $M_3$ betreiben.

Figur 4 zeigt mehrere Verläufe der rückgemessenen Spannungsdifferenz $U_1$, $U_2$ bzw. $U_3$ an der jeweils unbestromten Phase 12.1, 12.2 bzw. 12.3 über den Drehwinkel $\varphi$ in Abhängigkeit vom Betriebsstrom $i$, mit dem die jeweils anderen beiden Phasen bestromt werden. Dabei ist der Verlauf der Spannungsdifferenz $U_1$, $U_2$, $U_3$ der jeweiligen unbestromten Phase für verschiedene Betriebsströme $i$ aufgetragen, wobei die Werte des Betriebsstroms $i$ zwischen 0 und 1.500 liegen (beliebige Einheiten). Anhand der dargestellten Graphen ist erkennbar, dass die Stärke des Betriebsstroms $i$ Einfluss auf den Verlauf der jeweiligen Spannungsdifferenz $U_1$, $U_2$ bzw. $U_3$ hat. So führt ein hoher Betriebsstrom zu einer Änderung der Amplitude und auch zu einer Änderung des Winkelverlaufs der Spannungsdifferenz $U_1$, $U_2$ und $U_3$ durch das Auftreten einer Asymmetrie gegenüber niedrigen Betriebsströmen und dem stromlosen Fall. In dem gezeigten Beispiel wird die Amplitude der Spannungsdifferenz mit zunehmendem Betriebsstrom größer und die Asymmetrie steigt an. Nachdem die Werte eben dieser Spannungsdifferenz mit den Umschaltgrenzen der Kommutierungsintervalle $K_1$, $K_2$ und $K_3$ verglichen werden und das Umschalten der Kommutierung anhand dieses Vergleichs erfolgt, wirken sich derartige Abweichungen direkt auf die Kommutierung und entsprechend auf die Funktion und die Effizienz des Elektromotors aus.

Derartige Abweichungen können durch ein erfindungsgemäßes Verfahren zur Bereitstellung eines Kommutierungsintervalls reduziert oder vermieden werden. Im Folgenden wird ein beispielhaftes Verfahren erläutert, welches eine Anpassung eines Kommutierungsintervalls unter Berücksichtigung des Betriebsstroms beinhaltet. Die Erfindung ist jedoch nicht auf das erläuterte Beispiel beschränkt.

Für die Anpassung des Kommutierungsintervalls ist die Kenntnis der Magnetisierungsparameter $k_1$ und $k_2$ sowie der maximalen Induktivität der einzelnen Phasen von Vorteil. Sofern die Magnetisierungsparameter $k_1$ und $k_2$ nicht vorbekannt sind, können diese beispielsweise mittels des folgenden Verfahrens ermittelt werden.

Im Folgenden wird mit Bezug auf die Figuren ein Verfahren zur Bestimmung von Magnetisierungsparametern des Elektromotors 10 gemäß einer optionalen Ausführungsform erläutert. Zur Veranschaulichung der Erläuterung sollen die Phasen 12.1 und 12.2 des Elektromotors 10 die erste und zweite Phase des Elektromotors 10 darstellen, in welche verfahrensgemäß Strompulse eingespeist werden, während die dritte, unbestromte Phase durch die Phase 12.3 gebildet ist. Jedoch könnte die Zuordnung bzw. Reihenfolge auch nach Belieben anders gewählt werden.

Zunächst werden gemäß diesem Verfahren die Magnetisierungsparameter $k_1$ und $k_2$ des Dreiphasen-Elektromotors 10 bestimmt, sofern diese noch nicht vorbekannt sind. Außerdem kann das Verfahren eine Bestimmung der maximalen Induktivität $L_{max}$ der jeweiligen Phasen 12.1, 12.2 und 12.3 umfassen, sofern diese noch nicht vorbekannt sind. Gemäß manchen optionalen Ausführungsformen können die maximalen Induktivitäten $L_{max}$ der einzelnen Phasen als identisch angenommen werden, sodass nur die maximale Induktivität $L_{max}$ einer einzigen Phase ermittelt werden muss. Insbesondere kann die Ermittlung von $L_{max}$ durch eine Induktivitätsmessung einer einzelnen Phase oder für zwei Phasen gleichzeitig mit entsprechender Skalierung erfolgen.

Für die Bestimmung der Magnetisierungsparameter des Dreiphasen-Elektromotors wird die Spannung bzw. die Spannungsdifferenz $U_3$ am Anschluss der dritten Phase 12.3, welcher einen induktiven Spannungsteiler darstellt, über einen Messzeitraum hinweg gemessen. Dabei erfolgt eine Mehrzahl von Messungen, die in regelmäßigen oder unregelmäßigen Zeitabständen während des Messzeitraums durchgeführt werden. Während des Messzeitraums wird auch der Rotor gleichmäßig um zumindest einen Teil einer elektrischen Umdrehung relativ zum Stator gedreht. Dabei erfolgt das Messen der Spannung während des Messzeitraums derart, dass die Spannung am induktiven Spannungsteiler zumindest dann gemessen wird, wenn der Rotor jeweils einen von mehreren vorbestimmten Drehwinkeln relativ zum Stator einnimmt.

Die Drehung erfolgt dabei um zumindest solch einen Abschnitt einer vollen elektrischen Umdrehung, dass in dem abgedeckten Drehwinkelbereich zumindest ein Maximum und zumindest ein Minimum der gemessenen Spannungswerte $U_3$ am induktiven Spannungsteiler gemessen wird. Optional können die Messungen in sehr viel kleineren Zeitabständen bzw. Drehwinkelabständen durchgeführt werden, sodass sich optional ein Verlauf der Spannung $U_3$ in Abhängigkeit des Drehwinkels rekonstruieren lässt, wenngleich dies nicht zwingend erforderlich ist.

Für die Bestimmung des Magnetisierungsparameters $k_1$ wird eine Messung der Spannung $U_3$ am induktiven Spannungsteiler in Abhängigkeit vom Drehwinkel bei unbestromtem Motor durchgeführt, d.h. wenn abgesehen von den Spannungspulsen zur Erzeugung der Strompulse für die Bestimmung der Magnetisierungsparameter der Motor nicht bestromt wird. Für die Bestimmung des Magnetisierungsparameters $k_2$ wird eine entsprechende Messung bei bestromtem Motor 10 durchgeführt wird, wobei zusätzlich zu den Strompulsen auch eine kommutierte Bestromung des Motors 10 erfolgt, wobei die Kommutierung während des Messzeitraums unverändert beibehalten wird und nicht an den geänderten Drehwinkel angepasst wird. Beide Messungen können mehrmals durchgeführt werden, insbesondere abwechselnd, um etwa im Rahmen eines iterativen Vorgangs beide Magnetisierungsparameter zu bestimmen.

Es folgt nun zunächst eine Erläuterung der Bestimmung des Magnetisierungsparameters $k_1$. Dazu werden von einer Ansteuerung des Elektromotors 10 periodisch wiederholt über einen Messzeitraum Strompulse in die erste und zweite Phase 12.1 bzw. 12.2 eingespeist, während der Rotor über den Messzeitraum langsam und gleichmäßig relativ zum Stator gedreht wird. Die Drehung kann manuell durch einen Anwender oder automatisiert erfolgen. Außerdem werden die zeitgleich mit der Einspeisung der Strompulse die Spannungswerte der Spannung $U_3$ am induktiven

Spannungsteiler gemessen und die Messwerte abgespeichert. Dabei kann es ausreichend sein, wenn lediglich die Spannungswerte der Spannung $U_3$ bei jenen Drehwinkeln abgespeichert werden, bei denen die Spannung $U_3$ ein lokales Minimum oder Maximum aufweist, welche sodann den jeweiligen Winkelwerten zugeordnet werden. Alternativ kann eine engmaschigere Erfassung der Spannungswerte erfolgen, sodass der Verlauf der Spannung $U_3$ über den Drehwinkelbereich erkennbar ist und/oder rekonstruiert werden kann.

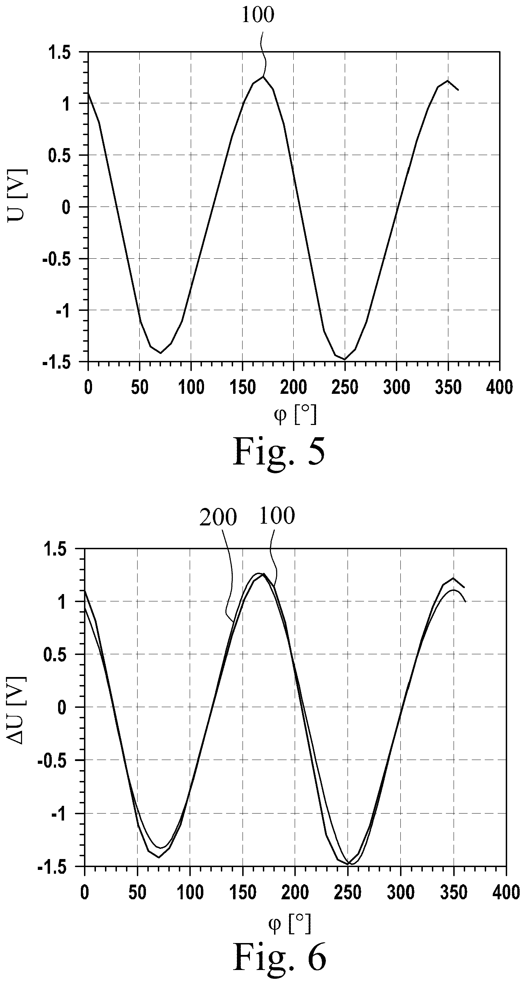

Figur 5 zeigt in Graph 100 beispielhaft den gemessenen Verlauf der Spannung $U_3$ am induktiven Spannungsteiler, d.h. am Anschluss der dritten Phase 12.3, über den Verlauf des Drehwinkels $\varphi$ bei unbestromtem Motor, d.h. wenn zur Bestimmung des Magnetisierungsparameters $k_1$ abgesehen von den Spannungspulsen zur Erzeugung der Strompulse für die Bestimmung der Magnetisierungsparameter der Motor nicht bestromt wird. Dabei ist auf der horizontalen Achse der Drehwinkel des Rotors relativ zum Stator in Grad von 0° bis 360° aufgetragen und auf der vertikalen Achse die gemessene Spannungsdifferenz zwischen den gemessenen Spannungswerten bei Messpulsen mit unterschiedlicher Polarität in Volt aufgetragen. Der Graph 100 verdeutlicht, dass die gemessene Spannung $U_3$ bzw. Spannungsdifferenz einen sinusförmigen Verlauf mit einer Periodizität von etwa 180° und einer Amplitude von ca. 1,3 V aufweist, wobei die Sinuskurve um die Null-Linie oszilliert.

Ferner umfasst das Verfahren ein Berechnen von entsprechenden Simulationswerten der Spannung am Spannungsteiler bei den vorbestimmten Drehwinkeln unter Verwendung vorbestimmter Schätzwerte für die Magnetisierungsparameter und ein Anpassen der vorbestimmten Schätzwerte für die Magnetisierungsparameter derart, dass eine Abweichung der Simulationswerte der Spannung von den Messwerten der gemessenen Spannung $U_3$ minimiert wird. Als initiale Schätzwerte für $k_1$ und $k_2$ können beispielsweise die Werte $k_1 = 0$ und $k_2 = 0$ angenommen werden.

Die Simulationswerte werden dabei anhand eines vorgegebenen mathematischen Modells berechnet. Ein beispielhaftes mathematisches Modell wird im Folgenden erläutert, ohne dass die Erfindung jedoch darauf beschränkt ist. Das mathematische Modell ist für den bereits oben erwähnten Beispielfall geschildert, in dem die erste und zweite Phase 12.1 und 12.2 mit Strompulsen versehen werden, während an der dritten, unbestromten Phase 12.3 die Spannung $U_3$ bzw. Spannungsdifferenz gemessen wird. Das mathematische Modell basiert auf dem folgenden Differenzialgleichungssystem.

$$(3) \qquad \frac{di_{L2}}{dt} = \frac{U_S - i_{L2}(R_1 + R_2)}{L_1 + L_2}$$

$$(4) \qquad U_3(t) = i_{L2} \cdot R_2 + L_2 \cdot \frac{di_{L2}}{dt}$$

wobei

$$(5) \qquad L_1 = L_{max} \cdot \{1 - k_1[1 + \cos(2\varphi)] + k_2 i_{L1}[\cos(\varphi) + \cos(2\varphi)]\}$$

$$(6) \qquad L_2 = L_{max} \cdot \{1 - k_1[1 + \cos(2(\varphi - 120°))] + k_2 i_{L2}[\cos(\varphi - 120°) + \cos(2(\varphi - 120°))]\}$$

$$(7) \qquad i_{L1} = -i_{L2}$$

Dabei indizieren $L_1$ und $L_2$ die Induktivität der ersten bzw. zweiten Phase 12.1 bzw. 12.2 des Dreiphasen-Elektromotors, $U_S$ die Versorgungsspannung, $R_1$ und $R_2$ den ohmschen Widerstand der ersten bzw. zweiten Phase 12.1 bzw. 12.2, t die Zeit und $U_3$ die am Anschluss der dritten Phase 12.3 gemessene Spannung bzw. Spannungsdifferenz. Die maximale Induktivität $L_{max}$ wird für alle Phasen des Elektromotors als gleich angenommen und kann beispielsweise mittels einer Induktivitätsmessung für eine einzelne Phase bestimmt werden. Sofern dies aufgrund eines räumlichen Überlaps von zwei der Phasen nicht ohne weiteres möglich sein sollte, können auch die maximalen Induktivitäten von zwei Phasen 12.1 und 12.2 zusammen gemessen werden und der Wert $L_{max}$ einer einzelnen Induktivität durch ein entsprechendes Herunterskalieren bestimmt werden. Der Drehwinkel $\varphi$ ist dabei der Drehwinkel des Rotors relativ zum Stator. Parameter $k_1$ entspricht dem stromunabhängigen Magnetisierungsparameter, der die Induktivitätsvariation bedingt durch die Rotormagnete charakterisiert, und $k_2$ entspricht dem stromabhängigen Magnetisierungsparameter, der die Induktivitätsvariation durch die Bestromung der jeweiligen Phase charakterisiert. Mittels der oben dargestellten Gleichungen (3) bis (7) können sodann Simulationswerte für die Spannung $U_3$ berechnet werden, welche den zu erwartenden gemessenen Spannungswerten bei den vorbestimmten Drehwinkeln des Rotors während des Messzeitraums entsprechen. Die Spannungswerte werden also insbesondere für jene Drehwinkel berechnet, bei denen auch die Spannung $U_3$ gemessen wurde. Diese berechneten Spannungswerte können sodann mit den Werten der gemessenen Spannung verglichen werden. Darauf basierend kann sodann der Magnetisierungsparameter $k_1$ variiert und in einem Regressionsverfahren optimiert werden und der Einfluss auf die berechneten Simulationswerte überprüft werden. Für die initiale Simulation und Optimierung von $k_1$ bei unbestromtem Motor kann zunächst ein vorgegebener initialer Wert von $k_2$ angenommen werden, beispielsweise $k_2 = 0$. Sofern $k_2$ bereits in einer vorherigen Messung ermittelt und/oder optimiert wurde, kann optional dieser Wert verwendet werden.

Auf diese Weise kann eine Optimierung des Magnetisierungsparameter $k_1$ durchgeführt werden, welche das Ziel hat, eine Abweichung der berechneten Simulationswerte der Spannung von den entsprechenden gemessenen Spannungswerten zu minimieren. Der auf diese Weise simulativ ermittelte Wert des Magnetisierungsparameters $k_1$, für welchen die Abweichung am geringsten ist, kann sodann als der tatsächliche Magnetisierungsparameter $k_1$ dem vermessenen Dreiphasen-Elektromotor zugeordnet werden und/oder für eine Bestimmung des Parameters $k_2$ verwendet werden.

Figur 6 zeigt beispielhaft den gemessenen Verlauf der Spannung $U_3$ am induktiven Spannungsteiler aus Figur 3 (Graph 100) im Vergleich zum simulierten und hinsichtlich des Magnetisierungsparameters $k_1$ optimierten Verlauf der Spannung $U_3$ über den Drehwinkel $\varphi$ (Graph 200). Dabei ist erkennbar, dass die Graphen 100 und 200 nur eine geringe Abweichung aufweisen und demnach mittels der Variation von $k_1$ eine sehr genaue Anpassung der Simulation an die Messwerte erzielbar ist.

Entsprechende Verfahrensschritte können sodann für die Bestimmung des Magnetisierungsparameters $k_2$ durchgeführt werden, wobei abweichend vom oben dargestellten Verfahren für die Bestimmung des Magnetisierungsparameters $k_1$ die Verfahrensschritte bei bestromtem Motor durchgeführt werden. Dabei wird der Motor mit einem definierten vorgegebenen Strom mit vorgegebener und unverändert beibehaltener Kommutierung bestromt.

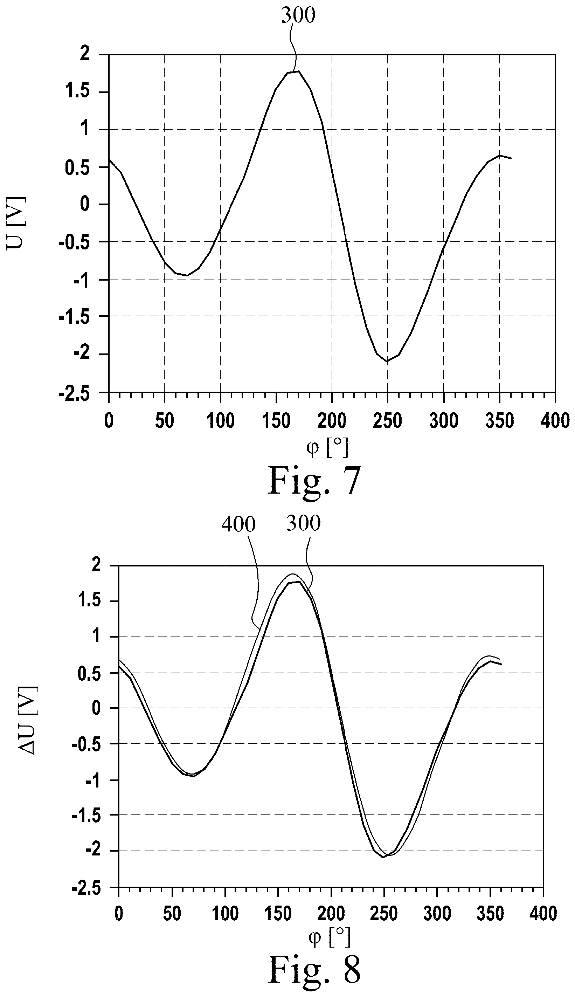

Figur 7 zeigt in Graph 300 den gemessenen Verlauf der Spannung $U_3$ (vertikale Achse, in Volt) am induktiven Spannungsteiler in Abhängigkeit vom Drehwinkel $\varphi$ (in Grad). Graph 300 entspricht dabei dem Verlauf der Spannung $U_3$, welche mittels periodisch wiederholt eingespeisten Strompulsen in die erste und zweite Phase 12.1 und 12.2 verursacht wird, während über den Messzeitraum der Rotor langsam und gleichmäßig relativ zum Stator gedreht wird. Die gemessenen Spannungswerte $U_3$ werden sodann in einem Speicher abgespeichert, wobei der Speicher zur Ansteuerung des Elektromotors gehörend oder separat von dieser ausgebildet sein kann. Auch in Graph 300 ist zu beobachten, dass die Spannung $U_3$ über eine elektrische Umdrehung lokale Minima und Maxima aufweist, welche für die Bestimmung des Magnetisierungsparameters $k_2$ herangezogen werden können.

Auch bei der Bestimmung des Magnetisierungsparameters $k_2$ erfolgt ein Berechnen und Optimieren von entsprechenden Simulationswerten und ein Vergleich mit den gemessenen Werten, welcher in Figur 8 dargestellt ist, wobei die Optimierung mittels einer Variation des Magnetisierungsparameters $k_2$ erfolgt. Dabei entspricht der Graph 300 dem bereits in Figur 7 gezeigten Graphen der gemessenen Spannung und Graph 400 dem simulierten und optimierten Verlauf der Spannung $U_3$. Bei der Optimierung des Magnetisierungsparameters $k_2$ kann ein vorbestimmter Wert für $k_1$ angenommen werden. Sofern bereits in einer vorherigen Messung der Magnetisierungsparameter $k_1$ bestimmt und/oder optimiert wurde, kann optional auch dieser Wert bei der Bestimmung des Magnetisierungsparameters $k_2$ verwendet werden. Durch eine mehrfache iterative Optimierung der Magnetisierungsparameter $k_1$ und $k_2$, wobei in jedem Iterationsschritt die Ergebnisse des vorherigen Iterationsschritts verwendet werden, kann die Genauigkeit der Bestimmung der Magnetisierungsparameter $k_1$ und $k_2$ verbessert werden. Wie in Figur 8 zu erkennen ist, kann auch für die Bestimmung des Magnetisierungsparameters $k_2$ eine sehr gute Übereinstimmung der simulierten mit den gemessenen Spannungswerten $U_3$ erzielt werden.

Mit bekannter maximaler Induktivität $L_{max}$ und bekannten Induktivitätsparametern $k_1$ und $k_2$ kann sodann die weitere Bestimmung der angepassten Kommutierungsintervalle erfolgen. Dabei wird der Betriebsstrom (i) ermittelt, der im Betrieb des Dreiphasen-Elektromotors auftritt. Der Betriebsstrom (i) kann beispielsweise durch entsprechende Strommessungen ermittelt werden und/oder durch eine Simulation ermittelt werden.

Das Anpassen des Kommutierungsintervalls in Abhängigkeit vom Betriebsstrom kann beispielsweise darauf gerichtet sein, dass die obere und untere Umschaltgrenze $g_{o,i}$ und $g_{u,i}$ neu festgelegt werden, die sodann den Abstand und die Verschiebung gegenüber den Umschaltgrenzen $g_{o,0}$ und $g_{u,0}$ des initialen Kommutierungsintervalls vorgeben. Beispielsweise können die Umschaltgrenzen derart festgelegt werden, dass ein Kommutierungsintervall 60° des Drehwinkelbereichs $\varphi$ abdeckt und der Nulldurchgang der Spannungsdifferenz $U_1$, $U_2$ bzw. $U_3$ in der Mitte des Kommutierungsintervall 60° bzw. des abgedeckten Drehwinkelsbereichs $\varphi$ liegt. Die sich daraus ergebenden Umschaltgrenzen $g_{o,i}$ und $g_{u,i}$, welche in Abhängigkeit vom ermittelten Betriebsstrom ermittelt wurden, können sodann für die Kommutierung bei dem entsprechenden Betriebsstrom $i$ herangezogen werden.

Des Weiteren erfolgt eine Berechnung der Spannung bzw. Spannungsdifferenz $U_1$, $U_2$, bzw. $U_3$ am induktiven Spannungsteiler in Abhängigkeit vom Betriebsstrom (i) an den Umschaltgrenzen $g_{o,i}$ und $g_{u,i}$ mittels des oben beschriebenen Differenzialgleichungssystems in Gleichungen (3) bis (7). Dies kann beispielsweise numerisch erfolgen.

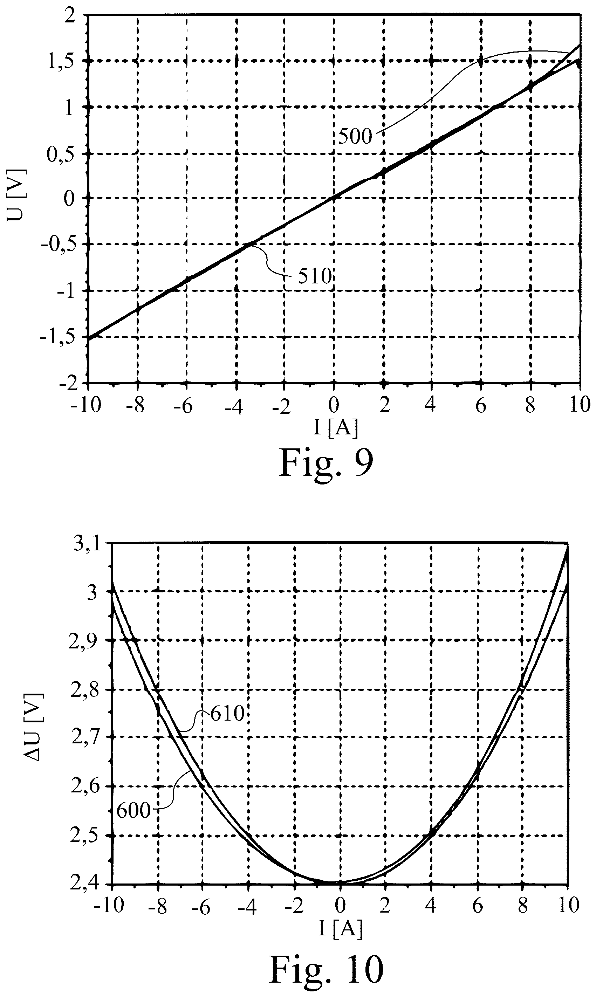

Beispielhafte Ergebnisse für die berechnete Spannung bzw. Spannungsdifferenz $U_1$, $U_2$ bzw. $U_3$ in Abhängigkeit vom Betriebsstrom (i) sind in den Figuren 9 und 10 dargestellt. Figur 9 zeigt dabei die Graphen 500 und 510, welche die lineare Abhängigkeit der Verschiebung des Kommutierungsintervalls mit dem Betriebsstrom (i) als Ergebnis einer Simulation (Graph 500) und nach einer Optimierung mittels Regression (Graph 510) darstellen. Die Graphen 500 und 510 zeigen eine sehr hohe Übereinstimmung und liegen nahezu übereinander. Die Verschiebung weist dabei einen linearen Verlauf auf und kann entsprechend als eine Gerade mit der Geradengleichung

$$(8) \qquad\qquad U = m \cdot i + n$$

beschrieben werden. Im dargestellten Beispiel hat diese Gerade eine Steigung von etwa m = 0,15 *V / A* und eine Nullpunktverschiebung *n = 0V*.

Die Abhängigkeit des Abstands zwischen der oberen und unteren Umschaltgrenze $g_{o,i}$ und $g_{u,i}$, die einer Spannungsdifferenz entspricht, ist in Figur 10 dargestellt, wobei Graph 600 dem Simulationsergebnis und 610 dem Ergebnis nach einer Optimierung mittels eines Regressionsverfahrens entspricht. Diese quadratische Abhängigkeit lässt sich als eine Parabel gemäß der folgenden Gleichung ausdrücken:

$$(9) \qquad\qquad \Delta U = a \cdot (i - i_0)^2 + b$$

Dabei indiziert $\Delta U$ die Spannungsdifferenz zwischen der oberen und unteren Umschaltgrenze $g_{o,i}$ und $g_{u,i}$, der Parameter *a* die Öffnung der Parabel, $i_0$ den Betriebsstrom des initialen Kommutierungsintervalls, der insbesondere bei mittelwertbehafteten Messpulsen nicht notwendigerweise Null ist, und der Parameter b die Scheitelpunktverschiebung. Aus Graph 610 ergeben sich die Werte *a* = 0,0062 $V / A^2$, $i_0$ = 0, und b = 2,4 *V*.

Insbesondere können die Parameter m, n, a, b und $i_0$ im Rahmen eines Optimierungsverfahrens optimiert werden, um etwa eine Abweichung der Ergebnisse der Berechnungen aus Gleichung (8) und Gleichung (9) von denen der Simulationsergebnisse zu minimieren. Alternativ können die Parameter m, n, a, b und $i_0$ im Rahmen eines Optimierungs- verfahrens optimiert werden, um eine Abweichung der Ergebnisse der Berechnungen aus Gl. (8) und Gl. (9) von gemessenen Werten zu minimieren.

Anhand der ermittelten und ggf. optimierten Parameter m, n, a, b und $i_0$ kann sodann das initiale Kommutierungsintervall in Abhängigkeit vom Betriebsstrom i angepasst werden. Beispielsweise können die Parameter m, n, a, b und $i_0$ der Steuereinheit zur Ansteuerung des Motors übergeben und von dieser verwendet werden, um anhand des Betriebsstroms i eine geeignete Anpassung und Verschiebung des Kommutierungsintervalls festzulegen. Alternativ oder zusätzlich können beispielsweise angepasste Kommutierungsintervalle für verschiedene Betriebsströme vorab festgelegt werden und in der Steuereinheit hinterlegt werden, beispielsweise in Form einer Tabelle, sodass die Steuereinheit in Abhängigkeit vom Betriebsstrom i ein entsprechend zugeordnetes, angepasstes Kommutierungsintervall auswählen und anwenden kann.

Gemäß manchen Ausführungsformen können auch Variationen und/oder Schwankungen einer Versorgungsspannung bzw. Betriebsspannung $U_S$, mit der der Elektromotor betrieben wird, einen Einfluss auf die Kommutierung und entsprechend auf den Betrieb und die Effizienz des Elektromotors haben. Gemäß manchen Ausführungsformen können auch die Einflüsse von Schwankungen und/oder Variationen der Versorgungsspannung $U_S$ bei der Anpassung der Kommutierungsintervalle mit berücksichtigt werden.

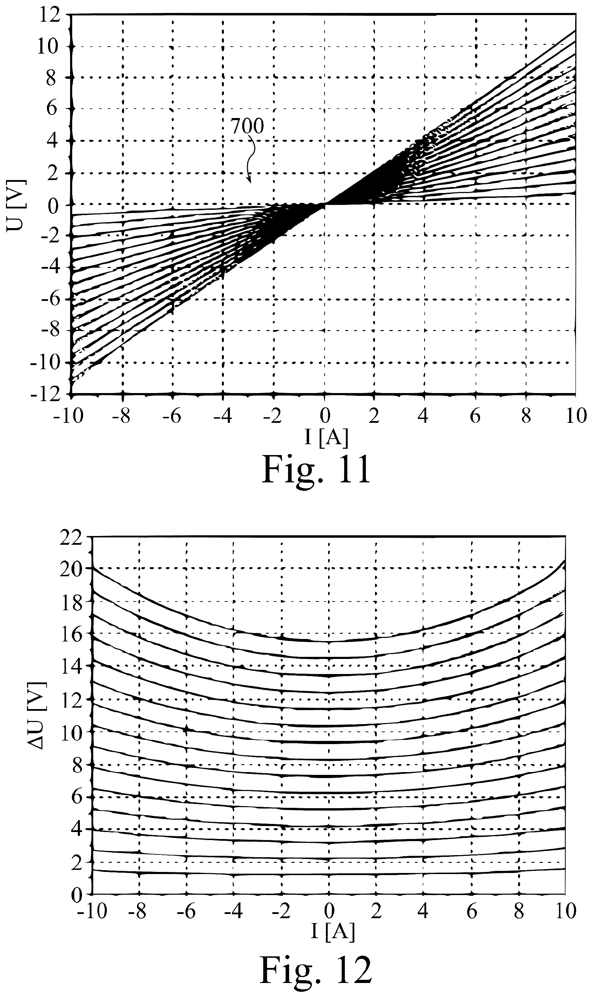

Figur 11 zeigt in mehreren Kurven die Abhängigkeit der Verschiebung des Kommutierungsintervalls aus Figur 9 für verschiedene Betriebsspannungen, wobei die Kure mit der kleinsten Steigung einer Versorgungsspannung $U_S$ von 6V und die Kurve mit der größten Steigung einer Versorgungsspannung $U_S$ von 80V entspricht. Entsprechend sind in Figur 12 die zugehörigen parabolischen Verläufe des Abstands der Kommutierungsgrenzen aus Figur 10 für die verschiedenen Versorgungsspannungen $U_S$ dargestellt, wobei die unterste Kurve einer Versorgungsspannung $U_S$ von 6V und die oberste Kurve einer Versorgungsspannung $U_S$ von 80V entspricht. Dies lässt erkennen, dass auch die Versorgungsspannung $U_S$ bzw. Abweichungen von einem erwarteten Versorgungsspannungswert, der dem initialen oder anhand des Betriebsstroms i angepassten Kommutierungsintervall zugrunde liegt, erheblichen Einfluss auf den Betrieb und die Effizienz des Motors haben können und eine Berücksichtigung der Versorgungsspannung bei der Anpassung des Kommutierungsintervalls vorteilhaft sein kann.

Insbesondere kann eine Berücksichtigung der Versorgungsspannung $U_S$ dadurch erfolgen, dass die gemes- sene Spannung bzw. Spannungsdifferenz $U_1$, $U_2$ bzw. $U_3$ auf die Versorgungsspannung normiert wird und die normierte Spannung $\Delta U_{rel}$ für die Wahl des Kommutierungsintervalls mit entsprechend normierten Umschaltgrenzen des Kommutierungsintervalls verwendet wird. Die zu verwendende Spannung kann daher wie folgt bestimmt werden:

$$\Delta U_{rel} = \frac{\Delta U}{U_S}$$

Die Versorgungsspannung $U_S$ kann beispielsweise durch eine oder mehrere entsprechende Spannungsmessungen bestimmt werden. Beispielsweise kann die Versorgungsspannung bei Inbetriebnahme des Motors gemessen werden und/oder regelmäßig oder unregelmäßig während des Betriebs des Motors. Dies bietet zudem den Vorteil, dass auch ein Einsatz des Motors und der Ansteuerung in Netzen mit unterschiedlichen Spannungen vereinfacht wird. Beispielsweise können sodann die Motoren in Bordnetzen eines Fahrzeugs mit 12V, 24V oder 48V verwendet werden und die Kommutierungsintervalle entsprechend angepasst werden.

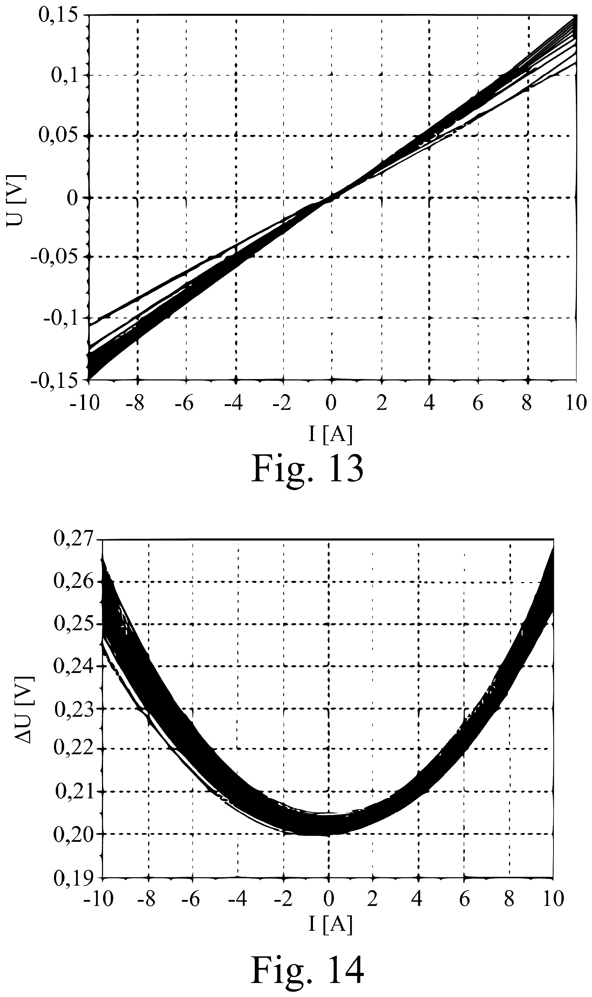

Die Figuren 13 und 14 zeigen Kurven, welche den Kurven aus Figur 11 bzw. Figur 12 entsprechen, nachdem die jeweiligen Spannungen auf die Versorgungsspannung normiert wurden. Das Ergebnis zeigt, dass durch die Normierung die Abhängigkeit der Verschiebung und des Abstands der Grenzen der Kommutierungsintervalle von der Versorgungsspannung deutlich reduziert werden kann. Auf diese Weise kann die Zuverlässigkeit und die Effizienz des Motors und dessen Ansteuerung weiter erhöht werden.

Bezugszeichenliste

| | |
|---|---|
| 10 | Dreiphasen-Elektromotor |
| 12 | Phase des Dreiphasen-Elektromotors |
| 12.1, 12.2, 12.3 | erste, zweite bzw. dritte Phase des Dreiphasen-Elektromotors |
| 14 | Sternpunkt |
| 20 | Steuereinheit |
| $U_1, U_2, U_3$ | Spannung am Anschluss der ersten, zweiten bzw. dritten Phase |
| $L_1, L_2, L_3$ | Induktivität der ersten, zweiten bzw. dritten Phase |
| $R_1, R_2, R_3$ | ohmscher Widerstand der ersten, zweiten bzw. dritten Phase |
| $i_{L1}, i_{L2}, i_{L3}$ | Stromfluss in der ersten, zweiten bzw. dritten Phase |
| $U_S$ | Versorgungsspannung |
| $g_{o,0}$ | obere Umschaltgrenze des initialen Kommutierungsintervalls |
| $g_{u,0}$ | untere Umschaltgrenze des initialen Kommutierungsintervalls |
| $g_{o,i}$ | obere Umschaltgrenze des angepassten Kommutierungsintervalls |
| $g_{u,i}$ | untere Umschaltgrenze des angepassten Kommutierungsintervalls |
| 100 | Graph der gemessenen Spannungsdifferenz in unbestromtem Fall |
| 200 | Graph der simulierten Spannungsdifferenz in unbestromtem Fall |
| 300 | Graph der gemessenen Spannungsdifferenz in bestromtem Fall |
| 400 | Graph der simulierten Spannungsdifferenz in bestromtem Fall |
| 500, 510, 700 | Graph der Verschiebung des Kommutierungsintervalls |
| 600, 610 | Graph des Abstands der Umschaltgrenzen |

**Patentansprüche**

1. Verfahren zur Bereitstellung eines Kommutierungsintervalls für einen Dreiphasen-Elektromotor (10), wobei das Kommutierungsintervall ein Wertebereich für eine rückgemessene Spannung an der unbestromten Phase ist, über welche eine vorbestimmte Kommutierung unverändert beibehalten wird, das Verfahren umfassend:

   - Bereitstellen eines initialen Kommutierungsintervalls für einen Betrieb des Dreiphasen-Elektromotors (10), wobei das Kommutierungsintervall eine obere Umschaltgrenze $g_{o,0}$ und eine untere Umschaltgrenze $g_{u,0}$ aufweist;
   - Ermitteln eines Betriebsstroms (i), der im Betrieb des Dreiphasen-Elektromotors (10) auftritt;

   **dadurch gekennzeichnet, dass** das Verfahren ferner umfasst:

   - Anpassen des initialen Kommutierungsintervalls in Abhängigkeit vom ermittelten Betriebsstrom (i), wobei eine mit dem Quadrat des Betriebsstroms (i) skalierende Anpassung eines Abstands zwischen der oberen Umschaltgrenze $g_{o,i}$ und der unteren Umschaltgrenze $g_{u,i}$ des Kommutierungsintervalls erfolgt und/oder eine linear mit dem Betriebsstrom skalierende Anpassung einer Verschiebung des Kommutierungsintervalls erfolgt.

2. Verfahren gemäß Anspruch 1, wobei vorbestimmte Funktionsparameter für die mit dem Quadrat des Betriebsstrom (i) skalierende Anpassung des Abstands zwischen der oberen Umschaltgrenze $g_{o,i}$ und der unteren Umschaltgrenze $g_{u,i}$ und/oder für die linear mit dem Betriebsstrom skalierende Anpassung der Verschiebung bereitgestellt werden und das Anpassen des Kommutierungsintervalls ein Berechnen des angepassten Abstands und/oder der angepassten Verschiebung unter Verwendung der vorbestimmten Funktionsparameter und des vorliegenden Betriebsstroms umfasst.

3. Verfahren gemäß Anspruch 1 oder 2, wobei mehrere angepasste Kommutierungsintervalle für unterschiedliche Betriebsströme (i) bereitgestellt werden und das Anpassen des Kommutierungsintervalls ein Auswählen eines der bereitgestellten, angepassten Kommutierungsintervalle anhand des vorliegenden Betriebsstroms umfasst.

4. Verfahren gemäß einem der Ansprüche 1 bis 3, ferner umfassend ein Bereitstellen von vorbestimmten Schwellwerten, wobei bei Vorliegen eines Betriebsstroms (i), der einem der Schwellwerte entspricht, das Anpassen des Kommutierungsintervalls erfolgt.

5. Verfahren gemäß Anspruch 4, ferner umfassend ein Bestimmen von Zusatz-Schwellwerten mittels Interpolation und/oder Extrapolation der vorbestimmten Schwellwerte, wobei bei Vorliegen eines Betriebsstroms, der einem der bestimmten Zusatz-Schwellwerte entspricht, das Anpassen des Kommutierungsintervalls erfolgt.

6. Verfahren gemäß einem der Ansprüche 1 bis 5, wobei die mit dem Quadrat des Betriebsstroms skalierende Anpassung eines Abstands zwischen der oberen Umschaltgrenze $g_{o,i}$ und der unteren Umschaltgrenze $g_{u,i}$ des Kommutierungsintervalls anhand einer parabolischen Funktion vorgenommen wird, die durch eine Öffnung der Parabel und einen y-Achsenabschnitt charakterisiert ist, und die Anpassung gemäß der Öffnung und optional einer Verschiebung des Scheitelpunkts der Parabel erfolgt, wobei die Parabel einer Funktion einer Spannungsdifferenz zwischen der oberen Umschaltgrenze $g_{o,i}$ und der unteren Umschaltgrenze $g_{u,i}$ gegenüber dem Betriebsstrom entspricht.

7. Verfahren gemäß einem der Ansprüche 1 bis 6, wobei die linear mit dem Betriebsstrom skalierende Anpassung der Verschiebung des Kommutierungsintervalls gemäß der Steigung und optional einer Nullpunktverschiebung einer Geraden erfolgt, wobei die Gerade eine lineare Abhängigkeit der Verschiebung des Mittelwertes des Kommutierungsintervalls beschreibt, welche einen Spannungswert darstellt, um welchen das Kommutierungsintervall gegenüber initialen Kommutierungsintervall in Abhängigkeit vom Betriebsstrom verschoben wird.

8. Verfahren gemäß einem der Ansprüche 1 bis 7, wobei die obere Umschaltgrenze $g_{o,i}$ und die untere Umschaltgrenze $g_{u,i}$ des Kommutierungsintervalls jeweils einem vorgegebenen Spannungswert einer Spannung an einem induktiven Spannungsteiler des Dreiphasen-Elektromotors entspricht oder darauf basiert.

9. Verfahren gemäß Anspruch 8, ferner umfassend ein Anpassen des initialen Kommutierungsintervalls in Abhängigkeit von einem ermittelten Spannungswert einer Versorgungsspannung $U_S$, mit welcher der Dreiphasen-Elektromotor (10) versorgt wird.

10. Verfahren gemäß Anspruch 9, wobei das Anpassen des initialen Kommutierungsintervalls in Abhängigkeit von dem ermittelten Spannungswert der Versorgungsspannung ein Normieren der Spannung am induktiven Spannungsteiler auf den ermittelten Spannungswert der Versorgungsspannung $U_S$ umfasst.

11. Steuereinheit (20) für einen Dreiphasen-Elektromotor (10), wobei die Steuereinheit (20) dazu eingerichtet ist,

- ein initiales Kommutierungsintervall für einen Betrieb des Dreiphasen-Elektromotors (10) bereitzustellen, wobei das Kommutierungsintervall eine obere Umschaltgrenze $g_{o,0}$ und eine untere Umschaltgrenze $g_{u,0}$ aufweist, wobei das Kommutierungsintervall ein Wertebereich für eine rückgemessene Spannung an der unbestromten Phase ist, über welche eine vorbestimmte Kommutierung unverändert beibehalten wird;
- einen Betriebsstrom (i) zu ermitteln, der im Betrieb des Dreiphasen-Elektromotors (10) auftritt;

**dadurch gekennzeichnet, dass** die Steuereinheit (20) ferner dazu eingerichtet ist:

- das initiale Kommutierungsintervall in Abhängigkeit vom ermittelten Betriebsstrom (i) derart anzupassen, dass eine mit dem Quadrat des Betriebsstroms (i) skalierende Anpassung eines Abstands zwischen der oberen Umschaltgrenze $g_{o,i}$ und der unteren Umschaltgrenze $g_{u,i}$ des Kommutierungsintervalls erfolgt und/oder eine linear mit dem Betriebsstrom skalierende Anpassung einer Verschiebung des Kommutierungsintervalls erfolgt.

**12.** Dreiphasen-Elektromotor (10) umfassend eine Steuereinheit (20) gemäß Anspruch 11.

**Claims**

**1.** A method of providing a commutation interval for a three-phase electric motor (10), wherein the commutation interval is a range of values for a measured-back voltage at the unenergized phase over which a predetermined commutation is maintained unchanged, the method comprising:

- providing an initial commutation interval for operation of the three-phase electric motor (10), wherein the commutation interval has an upper switching limit $g_{o,0}$ and a lower switching limit $g_{u,0}$;
- determining an operating current (i) which occurs during operation of the three-phase electric motor (10);

**characterized in that** the method further comprises:

- adjusting the initial commutation interval as a function of the determined operating current (i), wherein an adjustment of a distance between the upper switching limit $g_{o,i}$ and the lower switching limit $g_{u,i}$ of the commutation interval scaling with the square of the operating current (i) takes place and/or an adjustment of a displacement of the commutation interval scaling linearly with the operating current takes place.

**2.** The method according to claim 1, wherein predetermined function parameters are provided for the adjustment of the distance between the upper switching limit $g_{o,i}$ and the lower switching limit $g_{u,i}$ scaling with the square of the operating current (i) and/or for the adjustment of the displacement scaling linearly with the operating current, and adjusting the commutation interval comprises calculating the adjusted distance and/or the adjusted displacement using the predetermined function parameters and the present operating current.

**3.** The method according to claim 1 or 2, wherein multiple adjusted commutation intervals are provided for different operating currents (i), and adjusting the commutation interval comprises selecting one of the adjusted commutation intervals provided based on the present operating current.

**4.** The method according to any one of claims 1 to 3, further comprising providing predetermined threshold values, wherein adjusting the commutation interval takes place in the presence of an operating current (i) which corresponds to one of the threshold values.

**5.** The method according to claim 4, further comprising determining additional threshold values using interpolation and/or extrapolation of the predetermined threshold values, wherein adjusting the commutation interval takes place in the presence of an operating current which corresponds to one of the additional threshold values determined.

**6.** The method according to any one of claims 1 to 5, wherein the adjustment of a distance between the upper switching limit $g_{o,i}$ and the lower switching limit $g_{u,i}$ of the commutation interval scaling with the square of the operating current is performed on the basis of a parabolic function **characterized by** an opening of the parabola and a y-axis portion, and the adjustment is performed according to the opening and optionally a displacement of the apex of the parabola, wherein the parabola corresponds to a function of a voltage difference between the upper switching limit $g_{o,i}$ and the lower switching limit $g_{u,i}$ with respect to the operating current.

**7.** The method according to any one of claims 1 to 6, wherein the adjustment of the displacement of the commutation interval scaling linearly with the operating current takes place in accordance with the slope and optionally a zero point displacement of a straight line, wherein the straight line describes a linear dependence of the displacement of the mean value of the commutation interval which represents a voltage value by which the commutation interval is displaced relative to the initial commutation interval as a function of the operating current.

**8.** The method according to any one of claims 1 to 7, wherein the upper switching limit $g_{o,i}$ and the lower switching limit $g_{u,i}$ of the commutation interval respectively correspond to, or are based on, a predetermined voltage value of a voltage at an inductive voltage divider of the three-phase electric motor.

9. The method according to claim 8, further comprising adjusting the initial commutation interval as a function of a determined voltage value of a supply voltage $U_S$ with which the three-phase electric motor (10) is supplied.

10. The method according to claim 9, wherein adjusting the initial commutation interval as a function of the determined voltage value of the supply voltage comprises normalizing the voltage at the inductive voltage divider to the determined voltage value of the supply voltage $U_S$.

11. A control unit (20) for a three-phase electric motor (10), wherein the control unit (20) is adapted to:

- provide an initial commutation interval for operation of a three-phase electric motor (10), wherein the commutation interval has an upper switching limit $g_{o,0}$ and a lower switching limit $g_{u,0}$, wherein the commutation interval is a range of values for a measured-back voltage at the unenergized phase over which a predetermined commutation is maintained unchanged;
- determine an operating current (i) which occurs during operation of the three-phase electric motor (10);

**characterized in that** the control unit (20) is further adapted to:

- adjust the initial commutation interval as a function of the determined operating current (i) such that an adjustment of a distance between the upper switching limit $g_{o,i}$ and the lower switching limit $g_{u,i}$ of the commutation interval scaling with the square of the operating current (i) takes place and/or an adjustment of a displacement of the commutation interval scaling linearly with the operating current takes place.

12. A three-phase electric motor (10), comprising a control unit (20) according to claim 11.

**Revendications**

1. Procédé pour fournir un intervalle de commutation à un moteur électrique triphasé (10), dans lequel l'intervalle de commutation est une plage de valeurs pour une tension mesurée en retour à la phase non alimentée, au cours de laquelle une commutation prédéterminée est maintenue inchangée, le procédé comprenant :

- la fourniture d'un intervalle de commutation initial pour le fonctionnement du moteur électrique triphasé (10), dans lequel l'intervalle de commutation présente une limite de commutation supérieure $g_{o,0}$ et une limite de commutation inférieure $g_{u,0}$ ;
- la détermination d'un courant de fonctionnement (i) qui se produit lors du fonctionnement du moteur électrique triphasé (10) ;

**caractérisé en ce que le** procédé comprend également :

- l'ajustement de l'intervalle de commutation initial en fonction du courant de fonctionnement (i) déterminé, dans lequel un ajustement d'échelle d'une distance avec le carré du courant de fonctionnement (i) entre la limite de commutation supérieure $g_{o,i}$ et la limite de commutation inférieure $g_{u,i}$ de l'intervalle de commutation a lieu et/ou un ajustement d'échelle linéaire avec le courant de fonctionnement d'un décalage de l'intervalle de commutation a lieu.

2. Procédé selon la revendication 1, dans lequel des paramètres de fonction prédéterminés sont fournis pour l'ajustement d'échelle avec le carré du courant de fonctionnement (i) de la distance entre la limite de commutation supérieure $g_{o,i}$ et la limite de commutation inférieure $g_{u,i}$ et/ou pour l'ajustement d'échelle linéaire avec le courant de fonctionnement du décalage, et l'ajustement de l'intervalle de commutation comprend un calcul de la distance ajustée et/ou du décalage ajusté à l'aide des paramètres de fonction prédéterminés et le courant de fonctionnement présent.

3. Procédé selon la revendication 1 ou 2, dans lequel une pluralité d'intervalles de commutation ajustés sont fournis pour différents courants de fonctionnement (i), et l'ajustement de l'intervalle de commutation comprend une sélection de l'un des intervalles de commutation ajustés fournis sur la base du courant de fonctionnement présent.

4. Procédé selon l'une quelconque des revendications 1 à 3, comprenant également une fourniture de seuils prédéterminés, dans lequel l'ajustement de l'intervalle de commutation a lieu en présence d'un courant de fonctionnement (i) correspondant à l'un des seuils.

**5.** Procédé selon la revendication 4, comprenant en outre une détermination de valeurs de seuil supplémentaires au moyen d'une interpolation et/ou d'une extrapolation des valeurs de seuil prédéterminées, dans lequel l'ajustement de l'intervalle de commutation a lieu en présence d'un courant de fonctionnement correspondant à l'une des valeurs de seuil supplémentaires déterminées.

**6.** Procédé selon l'une quelconque des revendications 1 à 5, dans lequel l'ajustement d'échelle avec le carré du courant de fonctionnement d'une distance entre la limite de commutation supérieure $g_{o,i}$ et la limite de commutation inférieure $g_{u,i}$ de l'intervalle de commutation est effectué à l'aide d'une fonction parabolique **caractérisée par** une ouverture de la parabole et une partie de l'axe y, et l'ajustement a lieu selon l'ouverture et éventuellement un décalage du sommet de la parabole, dans lequel la parabole correspond à une fonction d'une différence de tension entre la limite de commutation supérieure $g_{o,i}$ et la limite de commutation inférieure $g_{u,i}$ par rapport au courant de fonctionnement.

**7.** Procédé selon l'une quelconque des revendications 1 à 6, dans lequel l'ajustement d'échelle linéaire avec le courant de fonctionnement du décalage de l'intervalle de commutation a lieu selon le gradient et éventuellement d'un décalage du point zéro d'une ligne droite, dans lequel la ligne droite décrit une dépendance linéaire du décalage de la valeur moyenne de l'intervalle de commutation, qui représente une valeur de tension par laquelle l'intervalle de commutation est décalé par rapport à l'intervalle de commutation initial en fonction du courant de fonctionnement.

**8.** Procédé selon l'une quelconque des revendications 1 à 7, dans lequel la limite de commutation supérieure $g_{o,i}$ et la limite de commutation inférieure $g_{u,i}$ de l'intervalle de commutation correspondent chacune à une valeur de tension prédéterminée d'une tension sur un diviseur de tension inductif du moteur électrique triphasé ou sont basées sur celle-ci.

**9.** Procédé selon la revendication 8, comprenant également l'ajustement de l'intervalle de commutation initial en fonction d'une valeur de tension déterminée d'une tension d'alimentation $U_S$, avec laquelle le moteur électrique triphasé (10) est alimenté.

**10.** Procédé selon la revendication 9, dans lequel l'ajustement de l'intervalle de commutation initial en fonction de la valeur de tension déterminée de la tension d'alimentation comprend la normalisation de la tension au diviseur de tension inductif à la valeur de tension déterminée de la tension d'alimentation $U_S$.

**11.** Unité de commande (20) pour un moteur électrique triphasé (10), dans lequel l'unité de commande (20) est conçue pour,

   - fournir un intervalle de commutation initial pour le fonctionnement du moteur électrique triphasé (10), dans laquelle l'intervalle de commutation présente une limite de commutation supérieure $g_{o,0}$ et une limite de commutation inférieure $g_{u,0}$, dans laquelle l'intervalle de commutation est une plage de valeurs pour une tension mesurée sur la phase hors tension sur laquelle une commutation prédéterminée est maintenue inchangée ;
   - déterminer un courant de fonctionnement (i) qui se produit lors du fonctionnement du moteur électrique triphasé (10) ;

   **caractérisé en ce que** l'unité de commande (20) est également conçue pour :

   - ajuster l'intervalle de commutation initial en fonction du courant de fonctionnement (i) déterminé, de sorte qu'un ajustement d'échelle avec le carré du courant de fonctionnement (i) d'une distance entre la limite de commutation supérieure $g_{o,i}$ et la limite de commutation inférieure $g_{u,i}$ de l'intervalle de commutation a lieu et/ou un ajustement d'échelle linéaire avec le courant de fonctionnement d'un décalage de l'intervalle de commutation a lieu.

**12.** Moteur électrique triphasé (10) comprenant une unité de commande (20) selon la revendication 11.

Fig. 1

Fig. 2A                    Fig. 2B

Fig. 3

Fig. 4

Fig. 5

Fig. 6

Fig. 7

Fig. 8

Fig. 9

Fig. 10

Fig. 11

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019127051 A1
- DE 102016123707 A1
- DE 102016123715 A1

**In der Beschreibung aufgeführte Nicht-Patentliteratur**

- **LI et al.** A Sensorless Commutation Error Correction Method for High-Speed BLDC Motors Based on Phase Current Integration. *IEEE TRANSACTIONS ON INDUSTRIAL INFORMATICS*, 2020, vol. 16 (1)